# EUROPEAN PATENT APPLICATION

(11) **EP 3 422 203 A1**
(43) Date of publication of application: **02.01.2019**
(21) Application number: 17178620.5
(22) Date of filing: 29.06.2017
(51) Int. Cl.: G06F 17/28, G06K 9/32

(54) **COMPUTER IMPLEMENTED SIMULTANEOUS TRANSLATION METHOD SIMULTANEOUS TRANSLATION DEVICE**

(71) Applicant: Vestel Elektronik Sanayi ve Ticaret A.S., 45030 Manisa (TR)
(72) Inventor: AYGÖR, Kemal Rifat, 45030 Manisa (TR); TÜFEKCI, Burak, 45030 Manisa (TR)
(74) Representative: Ascherl, Andreas

(57) **Abstract**

The present invention provides a computer implemented simultaneous translation method for translating text (102, 202) that is displayed on a display (151, 251) of a TV set (150, 250), the method comprising determining (S1) an area (103, 203) in which the text (102, 202) to be translated is displayed on the display (151, 251), identifying (S2) the text (102, 202) in the determined area (103, 203), translating (S3) the identified text (102, 202) into a predefined language, and displaying (S4) the translated text (105, 205). Further, the present invention provides a respective simultaneous translation device.

## Description

### TECHNICAL FIELD

The invention relates to a computer implemented simultaneous translation method. Further, the present invention relates to a simultaneous translation device.

### BACKGROUND OF THE INVENTION

Although applicable to any display device, the present invention will mainly be described in conjunction with displays of TV sets.

Modern TV programs offer a variety of different shows. In a plurality of TV shows Text may be displayed, e.g. overlaid over the original content of the TV show. Such text may e.g. be used to provide additional explanations regarding the TV show or persons appearing in the TV show.

Further, news tickers may be displayed. Such news tickers are mainly used e.g. by news channels when recent notifications or news must be provided without interrupting the running TV program.

The text that is overlaid over the running TV program is usually provided in the language of the TV channel.

Accordingly, there is a need for improving accessibility to the news tickers for foreign users.

### SUMMARY OF THE INVENTION

The present invention provides a computer implemented simultaneous translation method with the features of claim 1 and a simultaneous translation device with the features of claim 9.

Accordingly, it is provided:
A computer implemented simultaneous translation method for translating text that is displayed on a display of a TV set, the method comprising determining an area in which the text to be translated is displayed on the display, identifying the text in the determined area, translating the identified text into a predefined language, and displaying the translated text.

Further, it is provided:
A simultaneous translation device for translating text that is displayed on a display of a TV set, the simultaneous translation device comprising a processor configured to determine an area in which the text to be translated is displayed on the display and identify the text in the determined area, a translation device configured to translate the identified text, and a display controller configured to display the translated text on the display.

The present invention is based on the finding that especially in hotel rooms there may be foreign guests that are not capable of reading or understanding the language of national TV shows that may be watched with the TV sets provided in the hotel rooms. The present invention is further based on the finding that especially news channels provide a plurality of current or recent news via news tickers.

The present invention therefore automatically extracts the text of e.g. a news ticker or any other text that is displayed on the display of a TV set, and translates this text into a predefined language. This will allow a user of any language knowledge to understand at least the text that is displayed on the display and therefore e.g. follow the news ticker of a news channel.

The present invention first determines an area in which the text to be translated is displayed. "Area" in this respect refers e.g. to a position and a size of a rectangular area on the display. In computer technology and e.g. in modern digital TV sets, the display is arranged in horizontal lines and vertical columns and the number of lines and columns is called the resolution. The resolutions are usually provided as width x height. A possible resolution may e.g. be 1920x180 for a full HD display.

Therefore, the area may e.g. be defined by two coordinates, i.e. two opposite corners of the quadratic area. For example the coordinates of the upper left corner and the lower right corner could be given. As alternative, only one corner and values for height and width could be given.

After determining the area, the text to be translated is identified in the determined area. This means that only text that is displayed in the determined area will be used for translation. This allows e.g. separating the relevant text in the determined area from any other text that is shown on the display, e.g. logos of TV channels or TV shows. It is however also possible to define the complete display as area for identifying text and translate all text that can be seen on the display.

The identified text is then translated e.g. using automatic translation from the original language to a predefined target language. It may e.g. be possible for a user of the TV set to select the target language via the remote of the TV set. Alternatively, e.g. in a hotel, the nationality of the guest may be known and the language may be automatically set according to the user's nationality. Finally, the translated text may be displayed on the display of the TV set. The position for displaying the translated text may e.g. be selected by the user.

With the present invention it is therefore possible to provide users a translation of any text at any position of the display of the TV set.

The simultaneous translation method or device may e.g. be provided in an embedded computer or may be implemented at least in part in an embedded computer, e.g. an embedded computer of the TV set. Such an embedded computer may e.g. be provided as the digital signal control part of the TV set and may e.g. comprise a processor running an operating software. The embedded computer may further comprise network interfaces that may e.g. allow the simultaneous translation device to communicate with translation services or the like.

Further embodiments of the present invention are subject of the further subclaims and of the following description, referring to the drawings.

In an embodiment, determining the area may comprise retrieving the position and size of the area from a database.

The database may e.g. be a TV show database that comprises information about a plurality of TV shows of different TV channels. The database may e.g. comprise information about the position and the size of the area as indicated above. The information may therefore comprise the coordinates of at least two corners of the area or one corner and the size, e.g. width and height of the area. It is understood, that the information may be provided resolution independent, e.g. as percentage or according to a reference resolution. The database may e.g. be a combined database that also provides a program guide that may be displayed on the display for a user to select the TV show he wants to watch.

In an embodiment, the position and size of the area may be determined using an image recognition algorithm that identifies the text on the display of the TV set.

If no database is available an image recognition algorithm may provide an alternate way to detect or identify the area. Such an image recognition algorithm may e.g. detect continuous sequences of letters, words or sentences that are displayed permanently or e.g. as ticker on the display at a constant position. The details of possible algorithms are not explained here in detail. It is however understood, that any algorithm that is capable of detecting at least letters in an image may be used. The algorithm may e.g. detect sequences of letters and monitor the position of the sequences. If the sequences of letters are shown at a constant position at least for a predetermined period of time, the respective sequence may be selected for translation.

In another embodiment, determining the area may comprise inputting the position and size of the area via a remote control of the TV set.

Finally, a user may also determine the area in which the text to be translated is displayed by himself. The user may e.g. use the remote control of the TV set and e.g. mark two opposite corners of the area using arrows keys on the remote or the like. This allows a user to override any setting or selection that may have been performed automatically.

In an embodiment, identifying may comprise determining a background color of the determined area and selecting as the text pixels of a different color than the background color in the determined area.

When identifying the text in the area, the text may e.g. be separated from the background based on a background color of the determined area. For example news tickers will usually use a constant background color, e.g. white, and a constant text color, e.g. black or dark blue. Therefore, determining the background color in the determined area allows easily separating the text from the background based on the background color.

The determination of the background color may e.g. be performed by an algorithm, especially by the above mentioned image recognition algorithm. As explained above, the algorithm may detect letters. Therefore such an algorithm may also detect the color of the pixels that surround the letters, i.e. the background color in the area. It is understood, that if no image recognition algorithm as discussed above is provided, any other detection algorithm may be used to detect the background color.

It is understood that as an alternative, the background color may also be provided by the above mentioned program database with the information regarding the area in which the text is displayed.

In a further embodiment, identifying may comprise repeatedly selecting the pixels of a different color than the background color with a predetermined rate.

After determining the background color of the area in which the text is displayed, it is easy to extract the text. To extract the text simply all pixels may be selected that comprise another color than the background color and an optical character recognition, OCR, algorithm may be used to convert the extracted characters into text information that may be further processed.

It is well known that a text in a ticker may scroll from side to side or that the text that is displayed in the area may change with a predetermined frequency. Therefore, the pixels may repeatedly be selected with a predetermined rate. It is understood that the predetermined rate may be chosen according to the scrolling speed of the ticker text or the refresh rate of a text area. This information may e.g. also be provided by the program database.

As an alternative, the refresh rate or the ticker speed may be determined with a respective algorithm. With a periodically refreshing text area the algorithm may simply look for changes in the text area and measure the time between such changes. Such a monitoring may e.g. be performed pixel-wise in the whole area or specific regions or pixels may be selected for monitoring.

Repeatedly selecting may then e.g. be performed with a frequency that matches the refresh rate such that the complete text of the area is acquired with a single operation.

With a scrolling ticker text, an image recognition algorithm may follow a character and determine the time that the character requires to travel from one side of the text area to the other side of the text area.

Repeatedly selecting may then e.g. be performed with a frequency that matches the scroll speed of the text e.g. such that the pixels are selected every time the complete content of the text area is refreshed with new text.

In an embodiment, for a scrolling text, like in a text ticker, identifying the text may comprise repeatedly scanning a vertical pixel line with a height of the text at a scrolling end of the text with a predetermined scanning rate and combining the scanned pixel lines to identify the text at the determined position.

This embodiment relies on repeatedly scanning only a single vertical line of pixels and combining the single scanned lines to form a continuous image of the text that runs through the ticker. With this arrangement only few pixels have to be processed every time. However, the cycle frequency, i.e. the frequency with which the vertical line is scanned, must be higher in order to accurately recreate the text in the ticker, as will be shown below. If the cycle frequency is too low, only small sections of the letters will be scanned in each cycle.

In another embodiment, identifying the text may comprise segmenting the text into translatable units for translating the text, especially based on special characters in the text, especially punctuation marks.

The text may further be segmented into translatable units. A translatable unit may e.g. be a single word. A translatable unit may e.g. also be a sentence or a part of a sentence. Identifying the text segments may e.g. be performed by splitting the complete identified text at special characters, like e.g. a blank or space character, a period, a comma, a semicolon or the like.

Especially using a period or semicolon as delimiter may result in logically associated words being grouped together, e.g. words that form a sentence. Providing sentences as the units that must be translated will allow providing the content of the sentence through the translation in contrast to simply translating a sequence of single words.

In an embodiment, translating may comprise transmitting the text to be translated to an electronic translation service and receiving the translated text from the electronic translation service.

It is understood, that the translation may be performed locally by a function in the TV set. However, as an alternative, the text to be translated may be transmitted e.g. to an electronic online translation service for translation. Since such an online service may make use of a much larger processing power than the embedded system in the TV set and e.g. additional information databases, the translation may be performed more accurately with an electronic online translation service.

In a further embodiment, displaying may comprise displaying the translated text in the display at a predetermined position relative to the area of the text to be translated.

The translated text may e.g. be displayed above or below the text area. As an alternative, a user may select the position of the translated text e.g. with the remote control of the TV set. The translated text may be overlaid over the image of the running TV show. As alternative, a solid box may be drawn and the translated text may be provided in the solid box.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows flow diagram of an embodiment of a computer implemented simultaneous translation method according to the present patent application;
Fig. 2 shows flow diagram of another embodiment of a computer implemented simultaneous translation method according to the present patent application;
Fig. 3 shows a block diagram of an embodiment of a simultaneous translation device according to the present patent application;
Fig. 4 shows a block diagram of another embodiment of a simultaneous translation device according to the present patent application; and
Fig. 5 shows an example of a character as line-wise according to the present patent application.

In the figures like reference signs denote like elements unless stated otherwise.

### DETAILED DESCRIPTION OF THE DRAWINGS

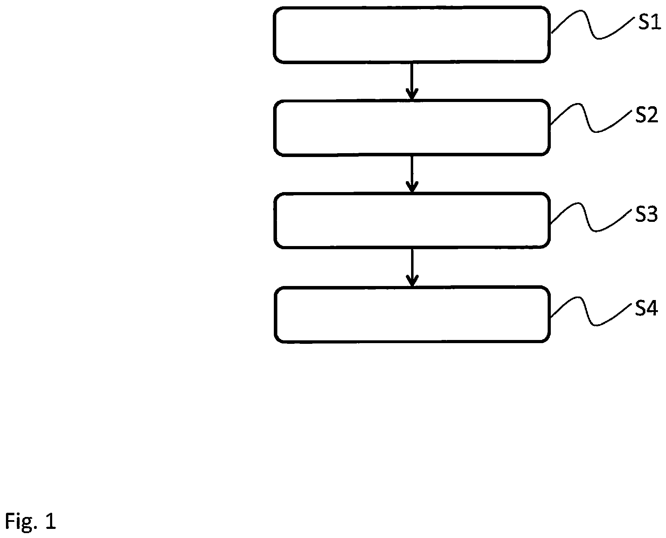

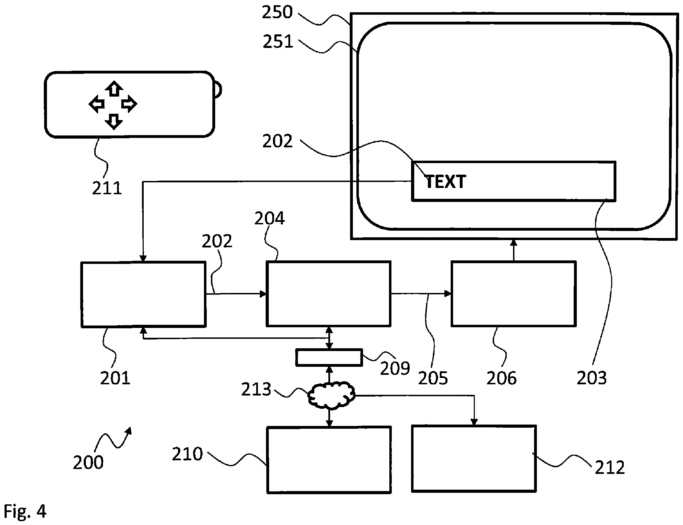

For sake of clarity in the following description of the method based Figs. 1 - 3 the reference signs used in the description of apparatus based Fig. 4 will be used.

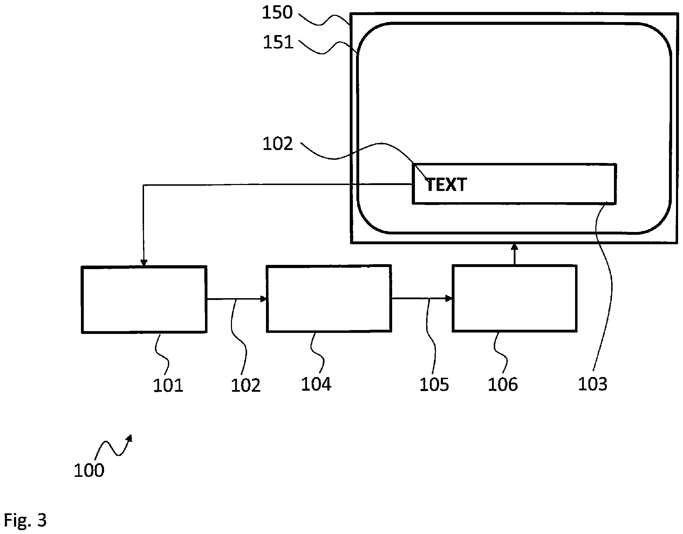

Fig. 1 shows flow diagram of a computer implemented simultaneous translation method for translating text 102, 202 that is displayed on a display 151, 251 of a TV set 150, 250. It is understood, that the computer implemented simultaneous translation method may e.g. be performed by a processing device of the TV set 150, 250, and especially by a simultaneous translation device as shown in Figs. 3 and 4.

The method comprises determining S1 an area 103, 203 in which the text 102, 202 to be translated is displayed on the display 151, 251. Further, the text 102, 202 in the determined area 103, 203 is identified S2. The method further comprises translating S3 the identified text 102, 202 into a predefined language, and displaying S4 the translated text 105, 205.

The area 103, 203 may e.g. be an area that is used by a TV program to provide text based information, such as a ticker area or a solid color area that displays non-moving text.

Identifying S2 may e.g. refer to accessing the content of an image memory of the TV set 150, 250 and analyzing that content. Image recognition or other steps in this regard may refer to this content of the image memory of the TV set 150, 250. The TV set 150, 250 may e.g. comprise an image memory for processing and preparing incoming image data prior to displaying the image data on the display 151, 251. The step of displaying S4 may also refer to modifying the content of said image memory. Displaying S4 the translated text 105, 205 may e.g. comprise rendering the text as image data and overlaying the rendered text over the original image in the image memory.

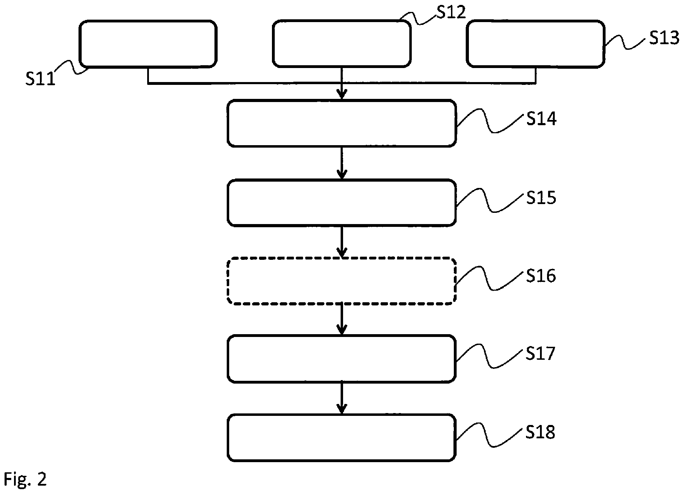

Fig. 2 shows flow diagram of another computer implemented simultaneous translation method. In the method of Fig. 2 the single general steps of Fig. 1 are detailed by further possible sub-steps.

The step of determining S1 the area 103, 203 is shown by three alternative or complementing steps. The first step comprises retrieving S11 the position and size of the area 103, 203 from a database 210. The second step comprises using S12 an image recognition algorithm that identifies the text 102, 202 on the display 151, 251 of the TV set 150, 250 for determining S1 the position and size of the area 103, 203. The third step may comprise inputting S13 the position and size of the area 103, 203 via a remote control of the TV set 150, 250.

These three steps may either be alternatively executed or may complement each other. If for example no network connection is available or no information about the position and size of the area 103, 203 is available for a given TV show in the database 210, the step S12 may be executed to automatically detect the position and size of the area 103, 203. If more than one possible area 103, 203 is detected, a user may select the appropriate area 103, 203. Further, a user may manually chose the area according to step S13.

Identifying S2 may comprise determining S14 a background color of the determined area 103, 203 and selecting S15 as the text 102, 202 pixels of a different color than the background color in the determined area 103, 203. Selecting the pixels of a different color than the background color may be repeatedly performed with a predetermined rate. The rate may depend on the frequency of actualization of the text 102, 202 or the scrolling speed of a ticker like text display.

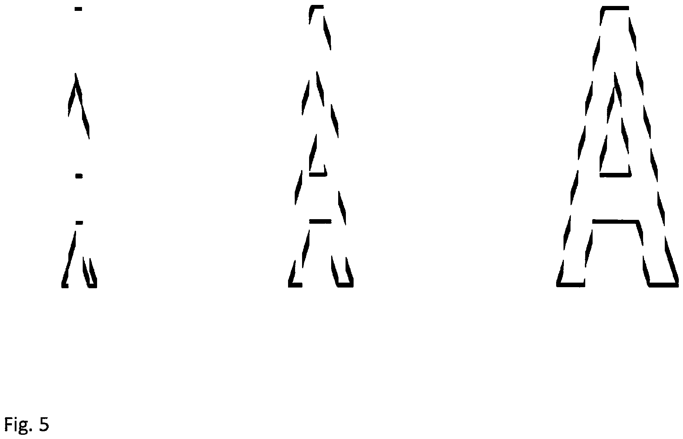

For a scrolling text 102, 202, like in a ticker, identifying S2 the text 102, 202 may comprise repeatedly scanning a vertical pixel line with a height of the text 102, 202 at a scrolling end of the text 102, 202 with a predetermined scanning rate and combining the scanned pixel lines to identify S2 the text 102, 202 at the determined position. An example of a letter "A" scanned at different frequencies is shown in Fig. 5.

Further, instead of translating the complete text 102, 202 identifying S2 the text 102, 202 may comprise as an optional step segmenting S16 the text 102, 202 into translatable units for translating S3. This segmentation may be performed based on special characters in the text 102, 202 like e.g. space characters or punctuation marks, like e.g. periods, commas or semicolons.

Translating S3 may comprise transmitting S17 the text 102, 202 to be translated to an electronic translation service 212 and receiving the translated text 105, 205 from the electronic translation service 212.

Finally, displaying S4 may comprise displaying S18 the translated text 105, 205 in the display 151, 251 at a predetermined position relative to the area 103, 203 of the text 102, 202 to be translated.

Fig. 3 shows a block diagram of an embodiment of a simultaneous translation device 100 for translating text 102 that is displayed on a display 151 of a TV set 150.

The simultaneous translation device 100 may e.g. be arranged as dedicated device in the TV set 150 or may be implemented in a processing device or an embedded controller of the TV set 150. As an alternative, the simultaneous translation device 100 may be implemented as a kind of set-top box that may be connected externally to the TV set 150.

The simultaneous translation device 100 comprises a processor 101 that is coupled to a translation device 104. The translation device 104 is coupled to the display controller 106. The display controller 106 is coupled to the display 151 of the TV set 150.

The processor 101 is capable of accessing and analyzing the image that is displayed on the display 151. The processor 101 may e.g. access an image memory of the TV set 150. The processor 101 determines an area 103 in which the text 102 to be translated is displayed on the display 151 and identifies the text 102 in the determined area 103. The processor 101 may e.g. use so called image or character or object recognition algorithms to identify the area 103 with the text 102.

The translation device 104 may then receive the identified text 102 from the processor 101 and translate the text 102. The translation device 104 may then provide the translated text 105 to the display controller 106. The display controller 106 may then display the translated text 105 on the display 151. The position of the translated text 105 on the display 151 may e.g. be determined based on the position of the area 103. The translated text 105 may e.g. be displayed above or below the area 103. The translated text 105 may also be displayed above the area 103, e.g. by providing a solid background for the translated text 105.

Fig. 4 shows a block diagram of another simultaneous translation device 200. The simultaneous translation device 200 is based on the simultaneous translation device 100. Therefore, the simultaneous translation device 200 also comprises the processor 201 coupled to the translation device 204. And the translation device 204 is coupled to the display controller 206.

The simultaneous translation device 200 further comprises a network interface 209 for connecting the simultaneous translation device 200 to a data network 213. Via the network interface 209 the simultaneous translation device 200 may access a database 210 and a translation service 212.

The database 210 may e.g. be a program database that comprises information about the area 203 for a specific TV show that is shown on the display 251 of the TV set 250. Such a database 210 may also comprise program information like a program guide. The processor 201 may e.g. contact the database 210 to retrieve information about the area 203.

The translation service 212 may be contacted via the data network 213 by the translation device 204 for translating the text 202.

The simultaneous translation device 200 further comprises a user input unit 211. The user input unit 211 may e.g. be a remote control of the TV set 250. With the user input unit 211 a user may e.g. select the area 203 and a position for displaying the translated text 205.

Fig. 5 shows an example of a character as line-wise according to the present patent application.

As explained, with a ticker-like scrolling text 102, 202, the scrolling text 102, 202 may be scanned line-wise by reading the pixels of a vertical line at a specific horizontal position of the ticker, e.g. the beginning where the text enters the ticker area 103, 202 or any other horizontal position of the ticker area 103, 203.

Depending on the scanning frequency for that vertical line, the results of the scan may vary. In Fig. 5 three scans of the letter A are presented. The left scan is performed with very low frequency. The center scan is performed with an intermediate frequency and the right scan is performed with a high frequency.

It can be seen that the high frequency provides the most accurate reproduction of the letter A, while the slow frequency provides no readable result at all.

Therefore it is understood, that for an automatic character recognition of the scrolling text 102, 202 an adequate scanning frequency has to be chosen.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides a computer implemented simultaneous translation method for translating text 102, 202 that is displayed on a display 151, 251 of a TV set 150, 250, the method comprising determining (S1) an area 103, 203 in which the text 102, 202 to be translated is displayed on the display 151, 251, identifying (S2) the text 102, 202 in the determined area 103, 203, translating (S3) the identified text 102, 202 into a predefined language, and displaying (S4) the translated text 105, 205. Further, the present invention provides a respective simultaneous translation device.

### List of reference signs

- S1 - S4: method steps
- S11 - S18: method steps

- 100, 200: simultaneous translation device
- 101, 201: processor
- 102, 202: text
- 103, 203: area
- 104, 204: translation device
- 105, 205: translated text
- 106, 206: display controller

- 209: network interface
- 210: database
- 211: user input unit
- 212: translation service
- 213: data network

- 150, 250: TV set
- 151, 251: display

## Claims

1. Computer implemented simultaneous translation method for translating text (102, 202) that is displayed on a display (151, 251) of a TV set (150, 250), the method comprising:
determining (S1) an area (103, 203) in which the text (102, 202) to be translated is displayed on the display (151, 251),
identifying (S2) the text (102, 202) in the determined area (103, 203),
translating (S3) the identified text (102, 202) into a predefined language, and
displaying (S4) the translated text (105, 205).

2. Computer implemented simultaneous translation method according to claim 1,
wherein determining (S1) the area (103, 203) comprises retrieving (S11) the position and size of the area (103, 203) from a database (210); and/or
wherein the position and size of the area (103, 203) is determined using (S12) an image recognition algorithm that identifies the text (102, 202) on the display (151, 251) of the TV set (150, 250); and/or
wherein determining (S1) the area (103, 203) comprises inputting (S13) the position and size of the area (103, 203) via a remote control of the TV set (150, 250).

3. Computer implemented simultaneous translation method according to any one of the preceding claims, wherein identifying (S2) comprises determining (S14) a background color of the determined area (103, 203) and selecting (S15) as the text (102, 202) pixels of a different color than the background color in the determined area (103, 203).

4. Computer implemented simultaneous translation method according to claim 3, wherein identifying (S2) comprises repeatedly selecting the pixels of a different color than the background color with a predetermined rate.

5. Computer implemented simultaneous translation method according to any one of the preceding claims, wherein for a scrolling text (102, 202) identifying (S2) the text (102, 202) comprises repeatedly scanning a vertical pixel line with a height of the text (102, 202) at a scrolling end of the text (102, 202) with a predetermined scanning rate and combining the scanned pixel lines to identify (S2) the text (102, 202) at the determined position.

6. Computer implemented simultaneous translation method according to any one of the preceding claims, wherein identifying (S2) the text (102, 202) comprises segmenting (S16) the text (102, 202) into translatable units for translating (S3), especially based on special characters in the text (102, 202), especially punctuation marks.

7. Computer implemented simultaneous translation method according to any one of the preceding claims, wherein translating (S3) comprises transmitting (S17) the text (102, 202) to be translated to an electronic translation service (212) and receiving the translated text (105, 205) from the electronic translation service (212).

8. Computer implemented simultaneous translation method according to any one of the preceding claims, wherein displaying (S4) comprises displaying (S18) the translated text (105, 205) in the display (151, 251) at a predetermined position relative to the area (103, 203) of the text (102, 202) to be translated.

9. Simultaneous translation device (100, 200) for translating text (102, 202) that is displayed on a display (151, 251) of a TV set (150, 250), the simultaneous translation device (100, 200) comprising:
a processor (101, 201) configured to determine an area (103, 203) in which the text (102, 202) to be translated is displayed on the display (151, 251) and identify the text (102, 202) in the determined area (103, 203),
a translation device (104, 204) configured to translate the identified text (102, 202), and
a display controller (106, 206) configured to display the translated text (105, 205) on the display (151, 251).

10. Simultaneous translation device (100, 200) according to claim 9, wherein the processor (101, 201) is configured to determine the area (103, 203) by retrieving the position and size of the area (103, 203) from a database (210), especially via a data network; and/or
wherein the processor (101, 201) is configured to determine the position and size of the area (103, 203) based on an image recognition algorithm that is configured to identify the text (102, 202) on the display (151, 251); and/or
wherein the simultaneous translation device (100, 200) comprises a user input (211) unit configured to receive a user input (211) regarding the position and size of the area (103, 203).

11. Simultaneous translation device (100, 200) according to any one of the preceding claims 9 and 10, wherein for identifying the text (102, 202) the processor (101, 201) is configured to determine a background color of the determined area (103, 203) and select as the text (102, 202) pixels of a different color than the background color in the determined area (103, 203).

12. Simultaneous translation device (100, 200) according to claim 11, wherein for identifying the text (102, 202) the processor (101, 201) is configured to repeatedly select the pixels of a different color than the background color with a predetermined rate.

13. Simultaneous translation device (100, 200) according to any one of the preceding claims 9 to 12, wherein for a identifying a scrolling text (102, 202) the processor (101, 201) is configured to repeatedly scan a vertical pixel line with a height of the text (102, 202) at a scrolling end of the text (102, 202) with a predetermined scanning rate and combine the scanned pixel lines to identify the text (102, 202) at the determined position; and/or
wherein for identifying the text (102, 202) the processor (101, 201) is configured to segment the text (102, 202) into translatable units, especially based on special characters in the text (102, 202), especially punctuation marks, wherein the translation device (104, 204) is configured to translate the translatable units.

14. Simultaneous translation device (100, 200) according to any one of the preceding claims 9 to 13, comprising a network interface (209) coupled to the processor (101, 201), wherein the processor (101, 201) is configured to transmit the identified text (102, 202) to a translation service (212) via the network interface (209) for translation of the identified text (102, 202) into a predefined language and receive the translated text (105, 205) from the translation service (212).

15. Simultaneous translation device (100, 200) according to any one of the preceding claims 9 to 14, wherein the display controller (106, 206) is configured to display the translated text (105, 205) in the display (151, 251) at a predetermined position relative to the area (103, 203) of the text (102, 202) to be translated.
